(19) Europäisches Patentamt / European Patent Office / Office européen des brevets

(11) **EP 4 040 660 A1**

(12) **EUROPEAN PATENT APPLICATION**

(43) Date of publication:
**10.08.2022 Bulletin 2022/32**

(21) Application number: **22155203.7**

(22) Date of filing: **04.02.2022**

(51) International Patent Classification (IPC):
**H02M 1/32** $^{(2007.01)}$ **H02M 1/36** $^{(2007.01)}$
**H02M 3/335** $^{(2006.01)}$

(52) Cooperative Patent Classification (CPC):
**H02M 1/36; H02M 1/32; H02M 3/33571;**
H02M 1/0074

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.02.2021 JP 2021018186**

(71) Applicants:
• **Kabushiki Kaisha Toshiba
Minato-ku
Tokyo 105-0023 (JP)**

• **Toshiba Infrastructure Systems &
Solutions Corporation
Kawasaki-shi, Kanagawa 212-0013 (JP)**

(72) Inventors:
• **KOUNO, Yuusuke
Kanagawa, 212-0013 (JP)**
• **BABA, Toshiyuki
Kanagawa, 212-0013 (JP)**

(74) Representative: **AWA Sweden AB
Junkersgatan 1
582 35 Linköping (SE)**

(54) **ISOLATED DC/DC CONVERTER WITH TON LIMITATION DURING START-UP**

(57) According to an embodiment, a power conversion apparatus includes a transformer, an inverter, a rectifier, a first voltage detector, a second voltage detector, and a control unit. The inverter includes a switch and outputs AC voltage to the primary side of the transformer by an ON/OFF operation of the switch. The rectifier converts the AC voltage from the secondary side of the transformer into DC output voltage. The first voltage detector detects input voltage input to the inverter. The second voltage detector detects the output voltage. The control unit sets, on the basis of the input voltage and the output voltage, permissible ON time for which the switch is set to an ON state such that a value of current output from the inverter does not exceed an upper limit value.

FIG. 1

**Description**

FIELD

Embodiments described herein relate generally to a power conversion apparatus.

BACKGROUND

Power conversion apparatuses have been provided. The power conversion apparatuses convert DC voltage supplied from high-voltage trolley wires (such as overhead lines and third rails) in electric railcars or the like into voltage corresponding to the load. Some of such power conversion apparatuses include high-frequency transformers (isolation transformers) excited with AC voltage from inverters.

A power conversion apparatus supplies the AC voltage of the inverter to a rectifier via the high-frequency transformer. Each of the inverter and the rectifier includes a capacitor in a DC circuit. Before the inverter operates, the capacitor of the rectifier is not charged, although the capacitor of the inverter is charged. For this reason, at the time when the inverter starts operation, a large difference in potential exists between the capacitor of the inverter and the capacitor of the rectifier, and a current exceeding the permissible upper limit may be output from the inverter.

PRIOR ART DOCUMENTS

PATENT DOCUMENT

Patent Document 1: Japanese Patent Application Publication No. 2017-118806

SUMMARY OF INVENTION

PROBLEM TO BE SOLVED

To solve the problem described above, a power conversion apparatus capable of preventing output of a current exceeding the upper limit is provided.

SOLUTION TO PROBLEM

According to an embodiment, a power conversion apparatus includes a transformer, an inverter, a rectifier, a first voltage detector, a second voltage detector, and a control unit. The transformer outputs AC voltage to a secondary side thereof with AC voltage input to a primary side thereof. The inverter includes a switch and outputs AC voltage to the primary side of the transformer by an ON/OFF operation of the switch. The rectifier converts the AC voltage from the secondary side of the transformer into DC output voltage. The first voltage detector detects input voltage input to the inverter. The second voltage detector detects the output voltage. The control unit sets, on the basis of the input voltage and the output voltage, permissible ON time for which the switch is set to an ON state such that a value of current output from the inverter does not exceed an upper limit value.

BRIEF EXPLANATION OF DRAWINGS

FIG. 1 is a diagram schematically illustrating a configuration example of a power conversion apparatus according to an embodiment;
FIG. 2 is a diagram for explaining a current path of the power conversion apparatus according to the embodiment;
FIG. 3 is a diagram for explaining a current path of the power conversion apparatus according to the embodiment;
FIG. 4 is a timing chart illustrating an operation example in the case where a current supplied with an inverter of the power conversion apparatus according to the embodiment exceeds a permissible value;
FIG. 5 is a timing chart illustrating an operation example in the case where control is executed to prevent the current supplied with the inverter of the power conversion apparatus according to the embodiment from exceeding the permissible value; and
FIG. 6 is a flowchart illustrating an operation example of the power conversion apparatus according to the embodiment.

DETAILED DESCRIPTION

An embodiment will now be explained hereinafter with reference to drawings.

A power conversion apparatus according to the embodiment converts DC voltage supplied from a high-voltage trolley wire (such as an overhead line and a third rail) in an electric railcar (movable body) or the like into voltage corresponding to the load. The power conversion apparatus functions as an auxiliary power supply device supplying power to other devices, such as illumination devices and air conditioners, apart from the main power supply device of a traveling motor for traveling the electric railcar.

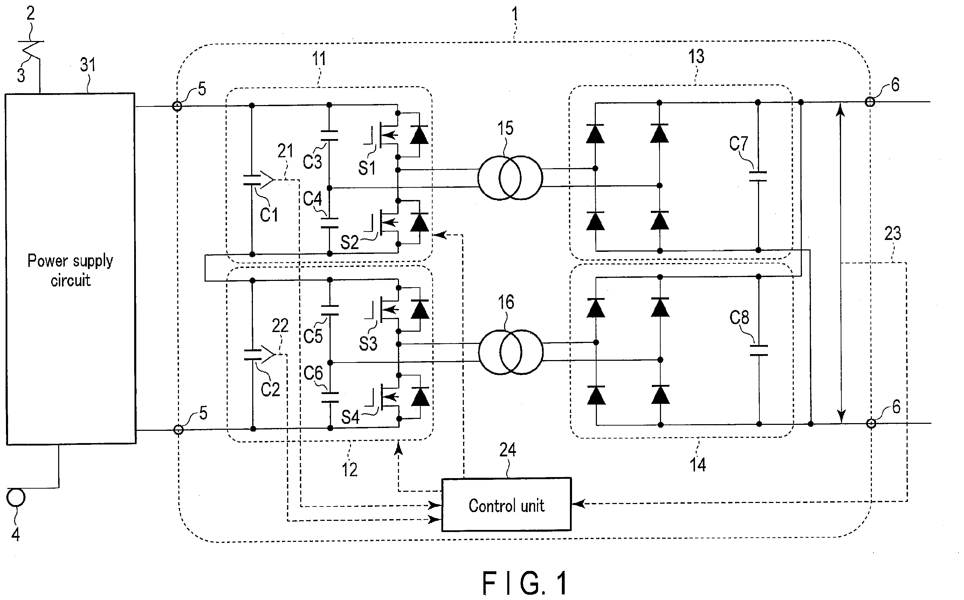

FIG. 1 schematically illustrates a configuration example of a power conversion apparatus 1. The power conversion apparatus 1 inputs DC voltage from a trolley wire 2, such as an overhead line and a third rail, via a current collector 3 and a power supply circuit 31. The power conversion apparatus 1 converts the input DC voltage into DC voltage corresponding to the load, and outputs the voltage from output terminals 6.

The power conversion apparatus 1 is explained as an auxiliary power supply device supplying power to a load, such as illumination devices and air conditioners of the electric railcar. The electric railcar includes a main power supply device (not illustrated) to drive a traveling motor. The main power supply device drives the traveling motor with DC power received from the trolley wire 2 via the current collector 3, to cause the electric railcar to travel on a line 4.

The power conversion apparatus 1 serving as the auxiliary power supply device for an electric railcar is connected to a device operating with lower voltage than that of the traveling motor. For this reason, in the power conversion apparatus 1, a primary side to which the voltage is input and a secondary side outputting the voltage are insulated.

An example of a structure to secure insulation of the primary side from the secondary side is a transformer insulating the primary side from the secondary side with a pair of electromagnetic coupling windings (coils). The size of the transformer increases as the excitation frequency decreases. For example, a transformer with set excitation frequency corresponding to the frequency of a commercial power supply has a large size. For this reason, the power conversion apparatus 1 according to the embodiment uses a high-frequency transformer to insulate the primary side from the secondary side and achieve reduction in size.

The power supply circuit 31 receives power from the trolley wire 2 via the current collector 3. The power supply circuit 31 converts the input DC voltage into predetermined DC voltage, and outputs the voltage to input terminals 5 of the power conversion apparatus 1. For example, the power supply circuit 31 is a chopper circuit.

The following is an explanation of configuration of the power conversion apparatus 1.

The power conversion apparatus 1 includes a first resonant inverter 11, a second resonant inverter 12, a first high-frequency transformer 15, a second high-frequency transformer 16, a first diode rectifier 13, a second diode rectifier 14, a voltage detector 23, and a control unit 24.

The first resonant inverter 11 and the second resonant inverter 12 are connected to the power supply circuit 31 in series. The first diode rectifier 13 and the second diode rectifier 14 are connected to the output terminals 6 in parallel. The control unit 24 is connected to the first resonant inverter 11, the second resonant inverter 12, and the voltage detector 23.

The voltage conversion apparatus 1 may further include another constituent element in addition to the structure illustrated in FIG. 1 if necessary, or a specific constituent element may be excluded from the power conversion apparatus 1.

The first resonant inverter 11 is an inverter circuit supplying AC voltage to the first high-frequency transformer 15 using the DC voltage supplied from the power supply circuit 31. The first resonant inverter 11 includes a DC end electrically connected to the power supply circuit 31 and an AC end electrically connected to the primary side of the first high-frequency transformer 15, and is configured as a resonant single-phase half-bridge inverter.

The first resonant inverter 11 includes a filter capacitor C1, a first switch S1, a second switch S2, a first resonant capacitor C3, a second resonant capacitor C4, and a voltage detector 21.

The filter capacitor C1 (first filter capacitor) is connected between a high-potential side DC end and a low-potential side DC end (end connected to the second resonant inverter 12 herein) of the first resonant inverter 11. The filter capacitor C1 smooths the DC voltage supplied from the power supply circuit 31.

The voltage detector 21 (first voltage detector) detects the voltage (first input voltage) of the filter capacitor C1. The detection result of the voltage detector 21 is supplied to the control unit 24.

The first switch S1 changes over electrical connection between the high-potential side DC end and one AC end. The first switch S1 is, for example, a MOSFET (Metal-Oxide Semiconductor Field-Effect Transistors). The first switch S1 is electrically connected at the drain to the high-potential side DC end, and electrically connected at the source to one AC end.

The second switch S2 changes over electrical connection between the low-potential side DC end and one AC end. The second switch S2 is, for example, a MOSFET. The second switch S2 is electrically connected at the drain to one AC end, and electrically connected at the source to the low-potential side DC end.

Each of the first switch S1 and the second switch S2 is not limited to a MOSFET, but may be other power semiconductor devices, such as a bipolar transistor and an IGBT (Insulated Gate Bipolar Transistor).

The first resonant capacitor C3 is electrically connected between the high-potential side DC end and the other AC end. The second resonant capacitor C4 is electrically connected between the low-potential side DC end and the other AC end.

Specifically, the primary winding of the first high-frequency transformer 15 is connected to a connecting point (one AC end) between the first switch S1 and the second switch S2 and a connecting point (the other AC end) between the first resonant capacitor C3 and the second resonant capacitor C4.

The first resonant inverter 11 is controlled with the control unit 24 with respect to ON/OFF operations of the first switch S1 and the second switch S2. The first resonant inverter 11 supplies AC voltage to the primary winding of the first high-frequency transformer 15 by ON/OFF operations. In the following explanation, the first switch S1 side of the first resonant inverter 11 is referred to as "upper arm" of the first resonant inverter 11, and the second switch S2 side of the first resonant inverter 11 is referred to as "lower arm" of the first resonant inverter 11.

The first high-frequency transformer 15 is an isolation transformer including a winding (first winding) on the primary side generating a magnetic flux and a winding (secondary winding) on the secondary side excited with the magnetic flux generated in the primary winding. When AC voltage is supplied from the first resonant inverter 11 to the primary winding of the first high-frequency transformer 15, a magnetic flux is generated in the primary winding. The magnetic flux generated in the primary winding generates an induced voltage in the secondary winding. In this manner, the first high-frequency transformer 15 supplies AC voltage to the secondary side in accordance with the AC voltage input from the primary side.

The first diode rectifier 13 is a circuit rectifying AC voltage generated in the secondary winding of the first high-frequency transformer 15, and is formed of, for example, a rectifier bridge circuit acquired by combining a plurality of diodes.

The first diode rectifier 13 includes a filter capacitor C7 connected to the rectifier bridge circuit. The filter capacitor C7 smooths the DC voltage supplied from the first diode rectifier 13. The filter capacitor C7 outputs the DC voltage from the connected output terminal 6.

The second resonant inverter 12 is an inverter circuit supplying AC voltage to the second high-frequency transformer 16 using DC voltage supplied from the power supply circuit 31. The second resonant inverter 12 includes a DC end electrically connected to the power supply circuit 31 and an AC end electrically connected to the primary side of the second high-frequency transformer 16, and is configured as a resonant single-phase half-bridge inverter.

The second resonant inverter 12 includes a filter capacitor C2, a third switch S3, a fourth switch S4, a third resonant capacitor C5, a fourth resonant capacitor C6, and a voltage detector 22.

The filter capacitor C2 (second filter capacitor) is connected between a high-potential side DC end (end connected to the first resonant inverter 11 herein) and a low-potential side DC end of the second resonant inverter 12. The filter capacitor C2 smooths the DC power supplied from the power supply circuit 31.

The voltage detector 22 (first voltage detector) detects the voltage (second input voltage) of the filter capacitor C2. The detection result of the voltage detector 22 is supplied to the control unit 24.

The third switch S3 changes over electrical connection between the high-potential side DC end and one AC end. The third switch S3 is, for example, a MOSFET (Metal-Oxide Semiconductor Field-Effect Transistors). The third switch S3 is electrically connected at the drain to the high-potential side DC end, and electrically connected at the source to one AC end.

The fourth switch S4 changes over electrical connection between the low-potential side DC end and one AC end. The fourth switch S4 is, for example, a MOSFET. The fourth switch S4 is electrically connected at the drain to one AC end, and electrically connected at the source to the low-potential side DC end.

Each of the third switch S3 and the fourth switch S4 is not limited to a MOSFET, but may be other power semiconductor devices, such as a bipolar transistor and an IGBT (Insulated Gate Bipolar Transistor).

The third resonant capacitor C5 is electrically connected between the high-potential side DC end and the other AC end. The fourth resonant capacitor C6 is electrically connected between the low-potential side DC end and the other AC end.

Specifically, the primary winding of the second high-frequency transformer 16 is connected to a connecting point (one AC end) between the third switch S3 and the fourth switch S4 and a connecting point (the other AC end) between the third resonant capacitor C5 and the fourth resonant capacitor C6.

The second resonant inverter 12 is controlled with the control unit 24 with respect to ON/OFF operations of the third switch S3 and the fourth switch S4. The second resonant inverter 12 supplies AC voltage to the primary winding of the second high-frequency transformer 16 by ON/OFF operations. In the following explanation, the third switch S3 side of the second resonant inverter 12 is referred to as "upper arm" of the second resonant inverter 12, and the fourth switch S4 side of the second resonant inverter 12 is referred to as "lower arm" of the second resonant inverter 12.

The second high-frequency transformer 16 is an isolation transformer including a winding (first winding) on the primary side generating a magnetic flux and a winding (secondary winding) on the secondary side excited with the magnetic flux generated in the primary winding. When AC voltage is supplied from the second resonant inverter 12 to the primary winding of the second high-frequency transformer 16, a magnetic flux is generated in the primary winding. The magnetic flux generated in the primary winding generates an induced voltage in the secondary winding. In this manner, the second high-frequency transformer 16 supplies AC voltage to the secondary side in accordance with the AC voltage input from the primary side.

The second diode rectifier 14 is a circuit rectifying AC voltage generated in the secondary winding of the second high-frequency transformer 16, and is formed of, for example, a rectifier bridge circuit acquired by combining a plurality of diodes.

The second diode rectifier 14 includes a filter capacitor C8 connected to the rectifier bridge circuit. The filter capacitor C8 smooths the DC voltage supplied from the second diode rectifier 14. The filter capacitor C8 outputs the DC voltage from the connected output terminal 6.

As described above, the first diode rectifier 13 and the second diode rectifier 14 are connected in parallel to the output terminals 6 on the secondary side. Specifically, the first diode rectifier 13 and the second diode rectifier 14 output DC voltage to the output terminals 6. The DC voltage output from the output terminals 6 is converted with a circuit (not illustrated), such as an inverter, and supplied to the load.

The voltage detector 23 (second voltage detector) detects the voltage (output voltage) between the output terminals 6. The detection result of the voltage detector 23 is supplied to the control unit 24.

The control unit 24 acquires detection values from the voltage detectors 21, 22, and 23, and controls operations of the power conversion apparatus 1. The control unit 24 is an arithmetic unit including, for example, at least one processor and a memory storing therein a program executed with the processor and data used with the program. The control unit 24 is capable of achieving various functions to control the power conversion apparatus 1 with software or a combination of software and hardware.

The control unit 24 is formed as, for example, a logic circuit generating a pulse signal. Specifically, the control unit 24 is configured to generate a pulse signal by execution of the program with the processor of the control unit 24. The control unit 24 inputs a pulse signal to each of the first switch S1, the second switch S2, the third switch S3, and the fourth switch S4 and the like. For example, the control unit 24 executes PWM control to regulate the on/off duty ratio of the pulse signal. In this manner, the control unit 24 regulates the output of the power conversion apparatus 1.

The power conversion apparatus 1 may include the power supply circuit 31.

The following is an explanation of a current path of the power conversion apparatus 1.

First, the following is an explanation of a current path in the case where the upper arms of the first resonant inverter 11 and the second resonant inverter 12 are in the ON state (the first switch S1 and the third switch S3 are in the ON state).

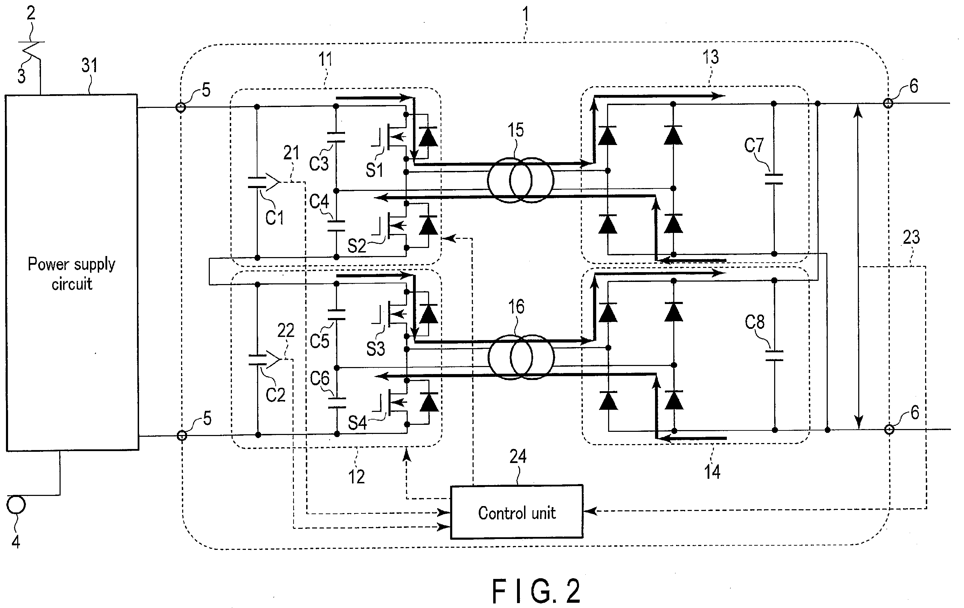

FIG. 2 is a diagram for explaining a current path in the case where the upper arms are in the ON state.

AC current supplied to the first high-frequency transformer 15 is output from the first switch S1 of the upper arm of the first resonant inverter 11. The AC current flows from the first switch S1, flows through the rectifier bridge circuit and the filter capacitor C7 of the first diode rectifier 13, and returns to the connecting point between the first resonant capacitor C3 and the second resonant capacitor C4. The AC current is divided at the connecting point into the first resonant capacitor C3 and the second resonant capacitor C4.

AC current supplied to the second high-frequency transformer 16 is output from the third switch S3 of the upper arm of the second resonant inverter 12. The AC current flows from the third switch S3, flows through the rectifier bridge circuit and the filter capacitor C8 of the second diode rectifier 14, and returns to the connecting point between the third resonant capacitor C5 and the fourth resonant capacitor C6. The AC current is divided at the connecting point into the third resonant capacitor C5 and the fourth resonant capacitor C6.

The following is an explanation of a current path in the case where the lower arms of the first resonant inverter 11 and the second resonant inverter 12 are in the ON state (the second switch S2 and the fourth switch S4 are in the ON state).

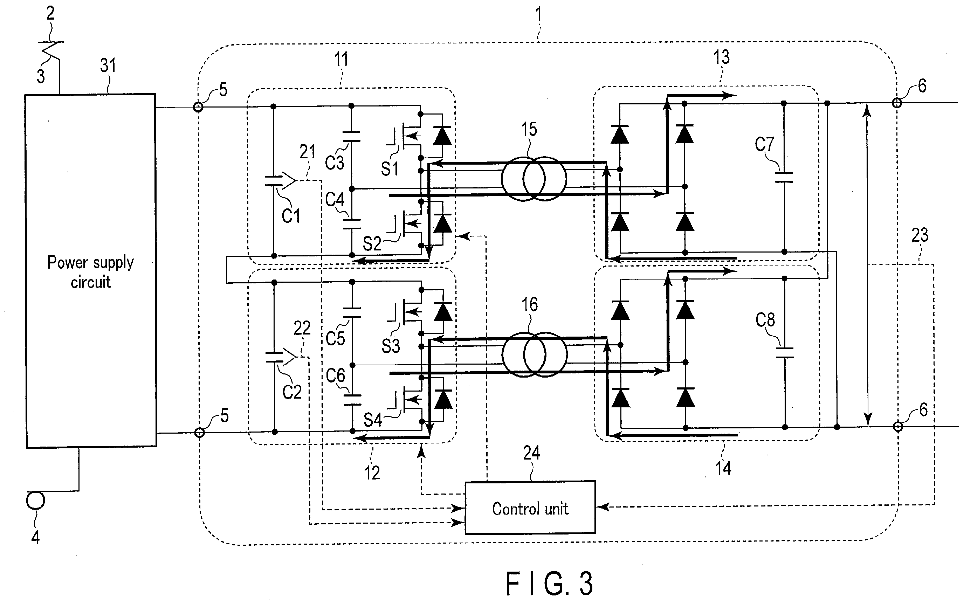

FIG. 3 is a diagram for explaining a current path in the case where the lower arms are in the ON state.

AC current supplied to the first high-frequency transformer 15 is output from the connecting point between the first resonant capacitor C3 and the second resonant capacitor C4. The AC current flows from the connecting point, flows through the rectifier bridge circuit and the filter capacitor C7 of the first diode rectifier 13, and returns to the second switch S2. The AC current is divided at the second switch S2 into the second resonant capacitor C4 and the filter capacitor C1.

AC current supplied to the second high-frequency transformer 16 is output from the connecting point between the third resonant capacitor C5 and the fourth resonant capacitor C6. The AC current flows from the connecting point, flows through the rectifier bridge circuit and the filter capacitor C8 of the second diode rectifier 14, and returns to the fourth switch S4. The AC current is divided at the fourth switch S4 into the fourth resonant capacitor C6 and the filter capacitor C2.

The following is an explanation of functions achieved with the power conversion apparatus 1. The functions achieved with the power conversion apparatus 1 are achieved by execution of the program stored in an inner memory and the like with the control unit 24.

First, the control unit 24 has a function of determining whether any abnormality has occurred in the filter capacitor C1 or C2 or the like on the basis of the value of the first input voltage and the second input voltage.

In this example, suppose that initial charging of the filter capacitors C1 and C2, the first resonant capacitor C3, the second resonant capacitor C4, the third resonant capacitor C5, and the fourth resonant capacity C6 has been finished.

When initial charging is finished, the control unit 24 detects the first input voltage and the second input voltage using the voltage detectors 21 and 22. When the control unit 24 detects the first input voltage and the second input voltage, the control unit 24 determines whether a difference between the value of the first input voltage and the value of the second input voltage is smaller than a predetermined threshold.

When the control unit 24 determines that the difference is equal to or larger than the predetermined threshold, the control unit 24 determines that an abnormality has occurred in the filter capacitor C1 or C2. When the control unit 24 determines that an abnormality has occurred in the filter capacitor C1 or C2, the control unit 24 stops the operation of the power conversion apparatus 1.

The control unit 24 also has a function of controlling the time (ON time) for which the each of the upper arms and the lower arms are in the ON state such that the output current values of the first resonant inverter 11 and the second resonant inverter 12 do not exceed the upper limit value (permissible current upper limit value) that can be outputted.

In this example, the control unit 24 controls the ON time to execute initial charging for the filter capacitors C7 and C8.

First, the following is an explanation of the case where the control unit 24 executes no control described above.

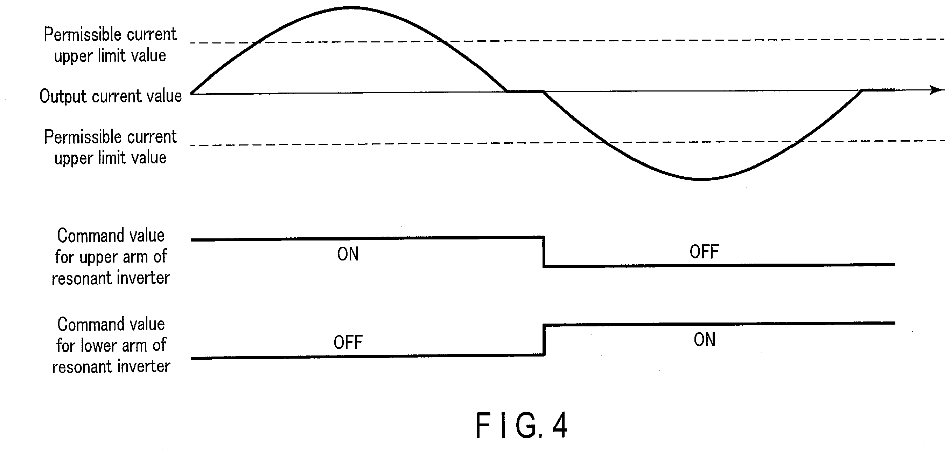

FIG. 4 is a timing chart for explaining the case where the control unit 24 executes no control described above.

FIG. 4 illustrates a value (output current value) of a current output with the first resonant inverter 11, a command value for the upper arm, and a command value for the lower arm.

The output current value is a value of a current output with the first resonant inverter 11 to the primary side of the first high-frequency transformer 15.

The command value for the upper arm is a pulse signal input with the control unit 24 to the first switch S1. The command value for the upper arm indicates the ON or OFF state. In a period in which the command value for the upper arm is in the ON state, the first switch S1 is in the ON state. In the same manner, in a period in which the command value for the upper arm is in the OFF state, the first switch S1 is in the OFF state.

The command value for the lower arm is a pulse signal input with the control unit 24 to the second switch S2. The command value for the lower arm indicates the ON or OFF state. In a period in which the command value for the lower arm is in the ON state, the second switch S2 is in the ON state. In the same manner, in a period in which the command value for the lower arm is in the OFF state, the second switch S2 is in the OFF state.

When the upper arm is in the ON state, the output current value is proportional to a difference in potential between the first resonant capacitor C3 and the filter capacitors C7 and C8. In addition, the first resonant capacitor C3 is initially charged and has a potential corresponding to the static capacitance. For this reason, the output current value increases from the time when the command value for the upper arm is changed to the ON state. The output current value keeps increasing for a predetermined period, and exceeds the permissible current upper limit value.

In the same manner, when the lower arm is in the ON state, the output current value is proportional to a difference in potential between the second resonant capacitor C4 and the filter capacitors C7 and C8. In addition, the second resonant capacitor C4 is initially charged and has a potential corresponding to the static capacitance. For this reason, the output current value decreases from the time when the command value for the lower arm is changed to the ON state (current flowing in a direction opposite to a direction in the case where the upper arm is in the ON state increases). The output current value keeps decreasing for a predetermined period, and becomes lower than the permissible current upper limit value.

The output current value of the second resonant inverter 12 changes in the same manner.

The control unit 24 controls the ON time to be short to prevent the output current value from exceeding the permissible current upper limit value as illustrated in FIG. 4.

First, the following is an explanation of a method for calculating the output current value.

The output current value is calculated by the following expressions.

[Numerical Expression 1]

$$i_{11}(t) = \sqrt{\frac{2C}{L}}\left(\frac{1}{2}V_{11} - V_{2pr}\right) sin \frac{1}{\sqrt{2CL}} t \quad \cdots (1)$$

$$i_{12}(t) = \sqrt{\frac{2C}{L}}\left(\frac{1}{2}V_{12} - V_{2pr}\right) sin \frac{1}{\sqrt{2CL}} t \quad \cdots (2)$$

In the expressions, V11 is the voltage value detected with the voltage detector 21, V12 is the voltage value detected with the voltage detector 22, and V2pr is a value acquired by executing primary conversion for the voltage value detected with the voltage detector 23. In addition, C is the static capacitance of the first resonant capacitor C3, the second resonant capacitor C4, the third resonant capacitor C5, and the fourth resonant capacitor C6. L is inductance of the resonant circuit including leakage inductances of the first diode rectifier 13 and the second diode rectifier 14, and t is the ON time. In addition, i11 (t) is the output current value of the first resonant inverter 11, and i12 (t) is the output current value of the second resonant inverter 12.

Because the voltage average value of the first resonant capacitor C3 and the second resonant capacitor C4 is half as large as the value of the filter capacitor C1, V11 is multiplied by 1/2 in the expression (1). In the same manner, because the voltage average value of the third resonant capacitor C5 and the fourth resonant capacitor C6 is half as large as the value of the filter capacitor C2, V12 is multiplied by 1/2 in expression (2).

The following is an explanation of a method for calculating the ON time (permissible ON time) with which the output current value reaches the permissible current upper limit value.

The permissible ON time is calculated by the following expressions.

[Numerical Expression 2]

$$T_{1ON} = \sqrt{2CL} \cdot arcsin \frac{I_{Lim}}{\sqrt{\frac{2C}{L}\left(\frac{1}{2}V_{11} - V_{2pr}\right)}} \quad \cdots (3)$$

$$T_{2ON} = \sqrt{2CL} \cdot arcsin \frac{I_{Lim}}{\sqrt{\frac{2C}{L}\left(\frac{1}{2}V_{12} - V_{2pr}\right)}} \quad \cdots (4)$$

In the expressions, $I_{Lim}$ is the permissible current upper limit value of the first resonant inverter 11 and the second resonant inverter 12, $T_{1ON}$ is the permissible ON time for the first resonant inverter 11, and $T_{2ON}$ is the permissible ON time of the second resonant inverter 12.

The output current value and the permissible ON time may be calculated by an approximation of a trigonometric function, as in the following expression.

[Numerical Expression 3]

$$i_{11}(t) = \frac{1}{L}\left(\frac{1}{2}V_{11} - V_{2pr}\right)t \quad \cdots (5)$$

$$i_{12}(t) = \frac{1}{L}\left(\frac{1}{2}V_{12} - V_{2pr}\right)t \quad \cdots (6)$$

$$T_{1ON} = L\frac{I_{Lim}}{\left(\frac{1}{2}V_{11} - V_{2pr}\right)} \quad \cdots (7)$$

$$T_{2ON} = L\frac{I_{Lim}}{\left(\frac{1}{2}V_{12} - V_{2pr}\right)} \quad \cdots (8)$$

The control unit 24 calculates the permissible ON time of the first resonant inverter 11 and the permissible ON time of the second resonant inverter 12 in accordance with the expressions (3) and (4) ( or expressions (7) and (8)).

The control unit 24 sets the calculated permissible ON time. Specifically, the control unit 24 sets the upper arm and the lower arm to the ON state for the calculated permissible ON time.

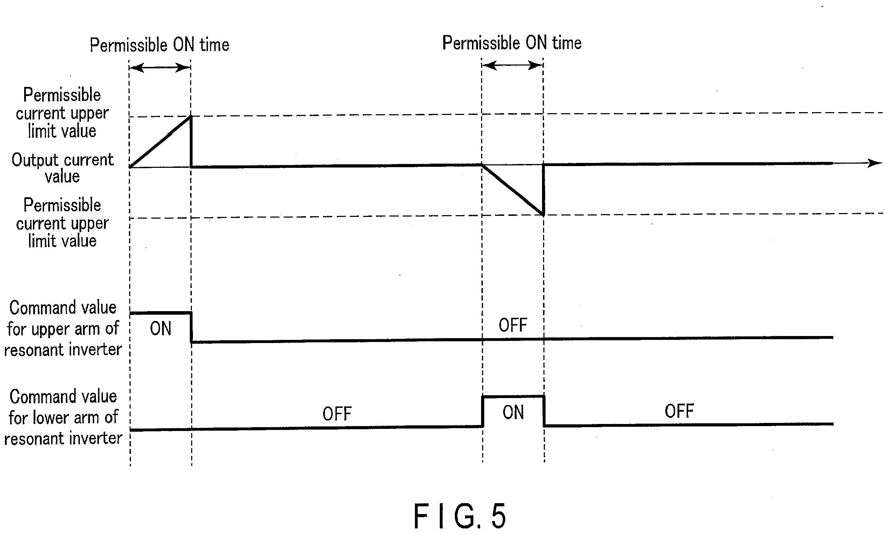

FIG. 5 is a timing chart for explaining the case where the control unit 24 sets the upper arm and the lower arm of the first resonant inverter 11 to the ON state for the permissible ON time.

FIG. 5 illustrates the value (output current value) of the current output with the first resonant inverter 11, the command value for the upper arm, and the command value for the lower arm.

As illustrated in FIG. 5, the control unit 24 sets the command value for the upper arm to the ON state for a period from the timing of turning on the upper arm to the time at which the permissible ON time passes. In the same manner, the control unit 24 sets the command value for the lower arm to the ON state for a period from the timing of turning on the lower arm to the time at which the permissible ON time passes.

The control unit 24 may set the command value for the upper arm or the lower arm to the ON state for a period shorter than the permissible ON time.

The same control is executed for the second resonant inverter 12.

The control unit 24 repeats the operation described above until charging of the filter capacitors C7 and C8 is finished. For example, the control unit 24 repeats the operation described above until a difference between the sum total of the values of the first input voltage and the second input voltage and the value of the output voltage becomes smaller than the predetermined threshold.

The control unit 24 also has a function of determining whether any abnormality has occurred in the filter capacitor C7 or C8 or the like on the basis of the value of the output voltage detected with the voltage detector 23.

The control unit 24 calculates a theoretical value of the output voltage. The control unit 24 calculates a theoretical value of the output voltage of the filter capacitor C7 at the time after the permissible ON time has passed in the state in which the upper arm and the lower arm are in the ON state.

The control unit 24 calculates the theoretical value as follows.

First, the control unit 24 calculates a current integrated value (that is, electric charge stored in each of the filter capacitors C7 and C8) serving as the integrated value of the current flowing into each of the filter capacitors C7 and C8, in accordance with the following expressions.

[Numerical Expression 4]

$$Q_1 = \int_0^{T_{1ON}} i_{11}(t) = 2C\left(\frac{1}{2}V_{11} - V_{2pr}\right)\left(1 - cos\frac{1}{\sqrt{LC}}T_{1ON}\right) \quad \cdots \quad (9)$$

$$Q_2 = \int_0^{T_{2ON}} i_{11}(t) = 2C\left(\frac{1}{2}V_{12} - V_{2pr}\right)\left(1 - cos\frac{1}{\sqrt{LC}}T_{2ON}\right) \quad \cdots \quad (10)$$

In the expressions, Q1 is a current integrated value of the filter capacitor C7, and Q2 is a current integrated value of the filter capacitor C8.

The control unit 24 may calculate the current integrated values in accordance with the following expressions using approximations of trigonometric functions.

[Numerical Expression 5]

$$Q_1 = \int_0^{T_{1ON}} i_{11}(t) = \frac{1}{2L}\left(\frac{1}{2}V_{11} - V_{2pr}\right)T_{1ON}^2 \quad \cdots \quad (11)$$

$$Q_2 = \int_0^{T_{2ON}} i_{11}(t) = \frac{1}{2L}\left(\frac{1}{2}V_{12} - V_{2pr}\right)T_{2ON}^2 \quad \cdots \quad (12)$$

When the control unit 24 calculates the current integrated values Q1 and Q2, the control unit 24 calculates the theoretical value of the output voltage in accordance with the following expression.

[Numerical Expression 6]

$$V_{2cal} = \frac{Q_{total}}{C_{2FC}} \quad \cdots \quad (13)$$

In the expression, $Q_{total}$ is the total value of Q1 and Q2, and $C_{2FC}$ is the total value of the static capacitance of the filter capacitor C7 and the static capacitance of the filter capacitor C8. $V_{2cal}$ is a theoretical value of the output voltage.

For example, each time the control unit 24 sets the upper arm and the lower arm to the ON state for the permissible ON time, the control unit 24 detects the output voltage using the voltage detector 23. When the control unit 24 detects the output voltage, the control unit 24 determines whether a difference between the value of the detected output voltage and the calculated theoretical value is smaller than the predetermined threshold.

When the control unit 24 determines that the difference is equal to or larger than the predetermined threshold, the control unit 24 determines that an abnormality has occurred in the filter capacitor C7 or C8. When the control unit 24 determines that an abnormality has occurred in the filter capacitor C7 or C8, the control unit 24 stops the operation of the power conversion apparatus 1.

The following is an explanation of an operation example in which the control unit 24 initially charges the filter capacitors C7 and C8.

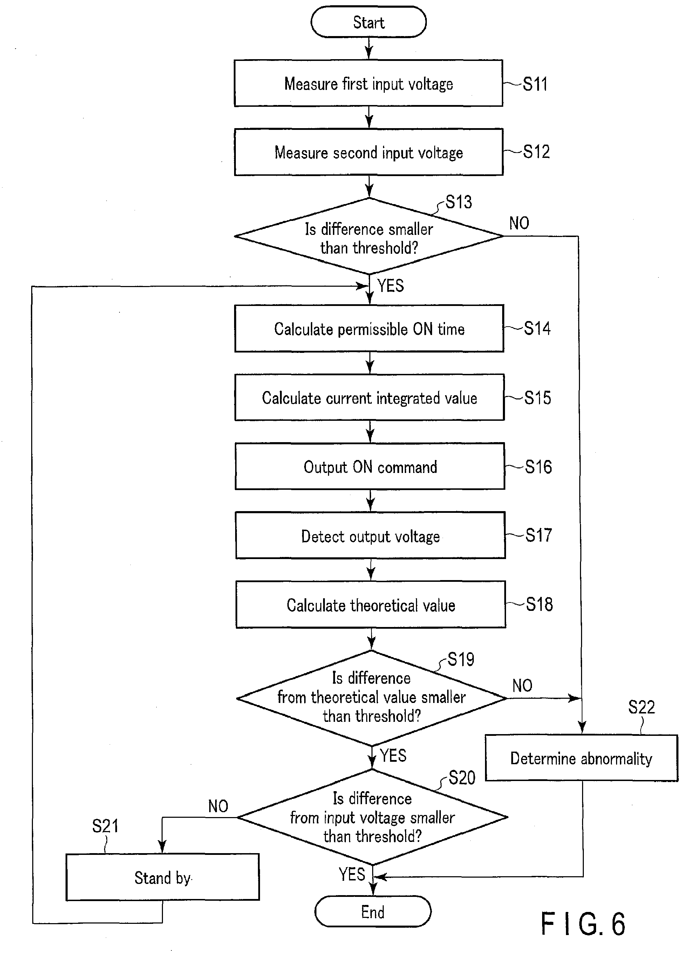

FIG. 6 is a flowchart for explaining an operation example in which the control unit 24 initially charges the filter capacitors C7 and C8.

First, the control unit 24 detects the first input voltage using the voltage detector 21 (S11). When the first input voltage is detected, the control unit 24 detects the second input voltage using the voltage detector 22 (S12).

When the second input voltage is detected, the control unit 24 determines whether a difference between the value of the first input voltage and the value of the second input voltage is smaller than the predetermined threshold (S13). When the control unit 24 determines that the difference between the value of the first input voltage and the value of the second input voltage is smaller than the predetermined threshold (Yes at S13), the control unit 24 calculates the permissible ON time (S14).

When the permissible ON time is calculated, the control unit 24 calculates the current integrated value (S15). When the control unit 24 calculates the current integrated value, the control unit 24 outputs an ON command value to the upper arm or the lower arm in accordance with the permissible ON time (S16).

When the control unit 24 outputs the ON command value, the control unit 24 detects the output voltage using the voltage detector 23 (S17). When the control unit 24 detects the output voltage, the control unit 24 calculates a theoretical value of the output voltage (S18).

When the control unit 24 calculates the theoretical value of the output voltage, the control unit 24 determines whether a difference between the value of the detected output voltage and the theoretical value of the output voltage is smaller than a predetermined threshold (S19).

When the control unit 24 determines that a difference between the value of the detected output voltage and the theoretical value of the output voltage is smaller than the predetermined threshold (YES at S19), the control unit 24 determines whether a difference between the sum total of the values of the first input voltage and the second input voltage and the value of the output voltage is smaller than the predetermined threshold (S20).

When the control unit 24 determines that a difference between the sum total of the values of the first input voltage and the second input voltage and the value of the output voltage is equal to or larger than the predetermined threshold (NO at S20), the control unit 24 stands by until the next timing to turn on the upper arm or the lower arm (S21) .

When the control unit 24 stands by until the next timing to turn on the upper arm or the lower arm, the control unit 24 returns to S14.

When the control unit 24 determines that a difference between the value of the first input voltage and the value of the second input voltage is equal to or larger than the predetermined threshold (NO at S13) or when the control unit 24 determines that a difference between the value of the detected output voltage and the theoretical value of the output voltage is equal to or larger than the predetermined threshold (NO at S19), the control unit 24 determines that an abnormality has occurred (S22).

When the control unit 24 determines that a difference between the sum total of the values of the first input voltage and the second input voltage and the value of the output voltage is smaller than the predetermined threshold (YES at S20) or the control unit 24 determines that an abnormality has occurred (S22), the control unit 24 ends the operation.

The power conversion apparatus 1 may include no second resonant inverter 12 and no second diode rectifier 14.

The power conversion apparatus 1 may detect the voltage of each of the first resonant capacitor C3, the second resonant capacitor C4, the third resonant capacitor C5, and the fourth resonant capacitor C6. In this case, the power conversion apparatus 1 does not necessarily detect the voltages of the filter capacitors C1 and C2.

When the power conversion apparatus 1 determines that an abnormality has occurred, the power conversion apparatus 1 may output a warning indicating occurrence of the abnormality.

When a difference between the voltage of the capacitor on the primary side and the voltage of the capacitor on the secondary side is large, the power conversion apparatus configured as described above initially charge the capacitor on the secondary side, with limited ON time of the upper arm or the lower arm on the primary side. Specifically, the power conversion apparatus initially charges the capacitor on the secondary side while the ON time is limited to prevent the current output from the primary side from exceeding the permissible quantity. Consequently, the power conversion apparatus is enabled to prevent output of current exceeding the permissible quantity from the primary side.

Some embodiments of the present invention have been described, but these embodiments are presented as examples are not intended to restrict the scope of the invention. These novel embodiments can be carried out in other various forms, and various omissions, replacement, and changes are possible within the range not departing from the gist of the invention. These embodiments and modifications thereof are included in the scope and/or the gist of the invention, and included in the inventions described in the claims and the equivalent range thereof.

EXPLANATION OF DRAWINGS

1... Power conversion apparatus, 2... Trolley wire, 3... Current collector, 4... line, 5... Input terminal, 6... Output terminal, 11... First resonant inverter, 12... Second resonant inverter, 13... First diode rectifier, 14... Second diode rectifier, 15... First high-frequency transformer, 16... Second high-frequency transformer, 21... Voltage detector, 22... Voltage detector, 23... Voltage detector, 24... Control unit, 31... Power supply circuit, C1... Filter capacitor, C2... Filter capacitor, C3... First resonant capacitor, C4... Second resonant capacitor, C5... Third resonant capacitor, C6... Fourth resonant capacitor, C7... Filter capacitor, C8... Filter capacitor, Q1... Current integrated value, Q2... Current integrated value, S1... First switch, S2... Second switch, S3... Third switch, S4... Fourth switch.

**Claims**

1. A power conversion apparatus comprising:

   a transformer outputting AC voltage to a secondary side thereof with AC voltage input to a primary side thereof;
   an inverter including a switch and outputting AC voltage to the primary side of the transformer by an ON/OFF operation of the switch;
   a rectifier converting the AC voltage from the secondary side of the transformer into DC output voltage;
   a first voltage detector detecting input voltage input to the inverter;
   a second voltage detector detecting the output voltage; and
   a control unit setting, on the basis of the input voltage and the output voltage, permissible ON time for which the switch is set to an ON state such that a value of current output from the inverter does not exceed an upper limit value.

2. The power conversion apparatus according to claim 1, wherein the control unit sets the permissible ON time on the basis of a difference between the input voltage and the output voltage.

3. The power conversion apparatus according to claim 1, wherein

   the inverter includes a resonant capacitor connected to the switch, and
   the control unit sets the permissible ON time also on the basis of static capacitance of the resonant capacitor.

4. The power conversion apparatus according to claim 1, wherein the control unit sets the permissible ON time also on the basis of inductance of the rectifier.

5. The power conversion apparatus according to claim 1, wherein

   the inverter includes a first filter capacitor smoothing the input voltage, and
   the first voltage detector detects voltage of the first filter capacitor.

6. The power conversion apparatus according to claim 1, wherein

   the rectifier includes a second filter capacitor smoothing the output voltage, and
   the second voltage detector detects voltage of the second filter capacitor.

7. The power conversion apparatus according to claim 6, wherein the control unit determines whether any abnormality has occurred, on the basis of a theoretical value of the voltage of the second filter capacitor after the switch is set to the ON state for the permissible ON time.

8. The power conversion apparatus according to claim 7, wherein, when a difference between a value of the output voltage detected with the second voltage detector and the theoretical value is equal to or larger than a predetermined threshold, the control unit determines that an abnormality has occurred.

F I G. 1

F I G. 2

F I G. 3

EP 4 040 660 A1

Permissible current
upper limit value

Output current value

Permissible current
upper limit value

Command value
for upper arm of
resonant inverter

ON                    OFF

Command value
for lower arm of
resonant inverter

OFF                   ON

# F I G. 4

FIG. 5

FIG. 6

Europäisches
Patentamt

European
Patent Office

Office européen
des brevets

**EUROPEAN SEARCH REPORT**

Application Number

**EP 22 15 5203**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/056742 A2 (ABB TECHNOLOGY AG [CH]) 17 April 2014 (2014-04-17) * figures 1,6-12 * * claims 1,2,3,6 * * equations 2, 3; pages 3,10,12 * | 1-6 | INV. H02M1/32 H02M1/36 H02M3/335 |
| X | US 2012/176816 A1 (SEEL CHRISTIAN [DE] ET AL) 12 July 2012 (2012-07-12) * figures 1,2 * * paragraphs [0007], [0016], [0018], [0021], [0023], [0025] * | 1-8 | |
| A | CHUANHONG ZHAO ET AL: "Power electronic transformer (PET) converter: Design of a 1.2MW demonstrator for traction applications", POWER ELECTRONICS, ELECTRICAL DRIVES, AUTOMATION AND MOTION (SPEEDAM), 2012 INTERNATIONAL SYMPOSIUM ON, IEEE, 20 June 2012 (2012-06-20), pages 855-860, XP032221818, DOI: 10.1109/SPEEDAM.2012.6264496 ISBN: 978-1-4673-1299-8 * figure 1 * | 1-8 | TECHNICAL FIELDS SEARCHED (IPC) H02M |

The present search report has been drawn up for all claims

| Place of search | Date of completion of the search | Examiner |
|---|---|---|
| The Hague | 15 June 2022 | Kail, Maximilian |

EPO FORM 1503 03.82 (P04C01)

## ANNEX TO THE EUROPEAN SEARCH REPORT
## ON EUROPEAN PATENT APPLICATION NO.

EP 22 15 5203

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2022

| Patent document cited in search report | | | Publication date | Patent family member(s) | | | Publication date |
|---|---|---|---|---|---|---|---|
| WO 2014056742 | A2 | | 17-04-2014 | NONE | | | |
| US 2012176816 | A1 | | 12-07-2012 | CN | 102498650 | A | 13-06-2012 |
| | | | | EP | 2299572 | A1 | 23-03-2011 |
| | | | | EP | 2481144 | A2 | 01-08-2012 |
| | | | | US | 2012176816 | A1 | 12-07-2012 |
| | | | | WO | 2011033132 | A2 | 24-03-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017118806 A